# EUROPÄISCHE PATENTANMELDUNG

(11) **EP 4 624 137 A1**
(43) Veröffentlichungstag der Anmeldung: **01.10.2025**
(21) Anmeldenummer: 25162691.7
(22) Anmeldetag: 10.03.2025
(51) Int. Cl.: B29C 64/153, B29B 9/00, B33Y 70/10, B33Y 10/00, C08K 3/00

(54) **KUNSTSTOFFPULVER MIT INKORPORIERTEM ABSORBER FÜR PULVERBASIERTE 3D DRUCKVERFAHREN**

(30) Priorität: 25.03.2024 DE 102024108444
(71) Anmelder: EOS GmbH Electro Optical Systems, 82152 Krailling (DE)
(72) Erfinder: Christ, Marius, 81241 München (DE); Hotter, Andreas, 83022 Rosenheim (DE); Fischer, Sybille, 82223 Eichenau (DE)
(74) Vertreter: Meissner Bolte Partnerschaft mbB

(57) **Zusammenfassung**

Die vorliegende Offenbarung betrifft Kunststoffpulver zur Verwendung als Aufbaumaterial zur additiven Herstellung von dreidimensionalen Objekten durch Einwirken von elektromagnetischer Strahlung, wobei das Kunststoffpulver inkorporierte Partikel eines hellen NIR-Strahlung absorbierenden Materials mit einer mittleren Partikelgröße D50, wie bestimmt mittels Laserbeugung, von ≤ 10 µm, in einer Menge von 0,01 bis 1,4 Gew.-% enthält. Die vorliegende Offenbarung betrifft weiterhin Verfahren zur Herstellung von entsprechenden Kunststoffpulvern, Verfahren zur Herstellung von dreidimensionalen Objekten, bei denen entsprechende Kunststoffpulver als Aufbaumaterial verwendet werden, und nach entsprechenden Verfahren hergestellte dreidimensionale Objekte, sowie Systeme, mit die soweit für die Verarbeitung von entsprechenden Kunststoffpulvern konfiguriert sind, dass das Kunststoffpulver in einem Vorratsbehälter des Systems vorliegt.

## Beschreibung

Die vorliegende Erfindung betrifft Kunststoffpulver zur Verwendung als Aufbaumaterial zur additiven Herstellung von dreidimensionalen Objekten durch Einwirken von elektromagnetischer Strahlung, wobei das Kunststoffpulver inkorporierte Partikel eines hellen NIR-Strahlung absorbierenden Materials mit einer mittleren Partikelgröße D50, wie bestimmt mittels Laserbeugung, von ≤ 10 µm, in einer Menge von 0,01 bis 1,4 Gew.-% enthält. Die vorliegende Erfindung betrifft weiterhin Verfahren zur Herstellung von entsprechenden Kunststoffpulvern, Verfahren zur Herstellung von dreidimensionalen Objekten, bei denen entsprechende Kunststoffpulver als Aufbaumaterial verwendet werden, und nach entsprechenden Verfahren hergestellte dreidimensionale Objekte, sowie Systeme, die soweit für die Verarbeitung von entsprechenden Kunststoffpulvern konfiguriert sind, dass das Kunststoffpulver in einem Vorratsbehälter des Systems vorliegt.

### Stand der Technik

Verfahren zum schichtweisen Aufbau von dreidimensionalen Objekten mit Hilfe von Kunststoffpulvern, bei denen das Objekt schichtweise durch Ausbringen von Pulverschichten und Aufschmelzen/Verfestigen von Schichtbereichen mittels elektromagnetischer Strahlung, die nach der Herstellung das dreidimensionale Objekt bilden, hergestellt wird, sind beispielsweise aus der DE 44 10 046 bekannt. Ein solches Verfahren zur Herstellung von dreidimensionalen Objekten wird auch als "Additive Manufacturing" bezeichnet.

Neben dem in der DE 44 10 046 beschriebenen System gibt es viele Modifikationen von Verfahren und Vorrichtungen zur Herstellung von dreidimensionalen Objekten (Formkörpern) durch selektives Sintern mittels elektromagnetischer Strahlung, die alternativ verwendet werden können. Zum Beispiel könnten statt eines Lasers und/oder eines Lichtstrahls andere Systeme verwendet werden, um selektiv elektromagnetische Strahlung auf die Schicht aufzubringen, wie beispielsweise Masken-Belichtungssysteme oder dergleichen. Anstelle eines CO₂-Lasers können Laserdioden, die bspw. zellenförmig angeordnet sein können, verwendet werden.

Als Aufbaumaterial kommt meist ein Pulver mit Partikeln/Pulverteilchen zum Einsatz, die aus einem thermoplastischen Polymermaterial gebildet sind, und gegebenenfalls weitere Bestandteile wie Füllstoffe oder Metallpartikel enthalten können. Die mechanischen Eigenschaften des hergestellten Objekts können durch geeignete Wahl des Polymers im Rohmaterial beeinflusst werden. So werden Polymere, die zu bevorzugten mechanischen Werkstoffeigenschaften im finalen Objekt führen, zum Beispiel in der DE 10 2008 024 281 A1 und DE 10 2008 024 288 A1 beschrieben. Ebenso wurde beschrieben, dass die mechanischen Eigenschaften durch Verwendung von Zusätzen wie Füllstoffen, Verstärkungsstoffen, Additiven, z.B. Pigmenten, weiter verbessert werden könnten. Beispielsweise könnten Kohlenstofffasern, Glasfasern, Aramidfasern, Carbon-Nanotubes, oder Zusätze, die ein geringes Aspektverhältnis (Glaskugeln, Aluminiumgries, etc.) oder mineralische Zusätze wie Titandioxid in das Polymer oder Copolymer-haltige Pulver einbezogen werden.

Ein möglicher Nachteil der bekannten nach dem oben beispielhaft beschriebenen Prinzip des "Additive Manufacturing" arbeitenden Sinterverfahren mittels CO₂-Laser stellt allerdings die mangelnde Flexibilität des Lasers dar. Um Kunststoffpulver oder mit Kunststoff ummantelte Partikel versintern zu können, wird üblicherweise ein CO₂-Laser verwendet, der eine Wellenlänge von 10600 nm aufweist. Hierbei muss ein aufwendiges Spiegelsystem verwendet werden, um den Laserstrahl über die Bauebene zu führen und der Laser muss permanent gekühlt werden. Eine Verwendung von Lichtwellenleitern ist mit CO₂-Lasern nicht möglich.

Ebenso wenig ist es möglich, ohne zusätzliche Maßnahmen auf preiswertere Laser mit einer Wellenlänge im Mittel- oder Nahinfrarotbereich, im Bereich des sichtbaren Lichts oder des Ultraviolettbereichs auszuweichen, da derartige Laser Kunststoffe ohne geeignete Zusätze nicht oder nur in unzureichendem Maße schmelzen können. Dieses Problem wurde in der deutschen Patentanmeldung DE 10 2004 012 683 A1 wenigstens teilweise durch die Zugabe von Absorbern zu polymerbasierten Pulvern gelöst. Die Absorber weisen ein Absorptionsspektrum auf, das Licht mit einer Wellenlänge im Mittel- oder Nahinfrarotbereich, im Bereich des sichtbaren Lichts oder des Ultraviolettbereichs absorbiert werden kann. Durch Belichtung der Absorber kann die sich im Absorber entwickelte Hitze zum Schmelzen der polymerbasierten Partikel genutzt werden. Es ist jedoch bekannt, dass als Trockenmischung (Dry Blend) eingemischte Additive in Lasersinter-Pulver einen negativen Einfluss auf den Laser-Sinter-Prozess (Verkleinerung des Prozessfensters, schlechtere z-Anbindung der Schichten) haben und somit zu schlechter Bauteilqualität führen können.

Nachteilig an der in der deutschen Patentanmeldung DE 10 2004 012 683 A1 vorgeschlagenen Lösung ist zudem, dass der Prozess zur Instabilität neigt, und der Prozess nur ein kleines Bau-/Temperaturfenster aufweist. Ein weiterer gravierender Nachteil ist, dass die so hergestellten Formkörper nur unzureichende mechanische Eigenschaften aufweisen.

Wenn die Kunststoffpartikel indirekt über NIR-Absorber aufgeschmolzen werden stellt sich zudem das Problem, dass eine möglichst effektive Übertragung der Energie auf die Kunststoffpartikel realisiert werden muss, da die eingestrahlte Energie zunächst vom Absorber aufgenommen und von diesem in der Folge an den Kunststoff abgegeben wird. Dabei können sich ersichtlich Bereiche des Kunststoffpulvers, in denen der Absorber in höherer Konzentration vorliegt, stärker erhitzen, was zu einer zu starken Erhitzung des direkt in der Umgebung solcher Absorberansammlungen vorliegenden Kunststoffs führt, in dessen Folge das Polymer abgebaut werden kann und/oder sich verfärbt. Zu geringe Konzentrationen von Absorber haben auf der anderen Seite zur Folge, dass sich die entsprechenden Bereiche bei der Einstrahlung von NIR-Strahlung nicht ausreichend erwärmen und schmelzen, was eine ungünstige oder unzureichende Schichtanbindung zur Folge haben kann. Eine solche macht sich im fertigen Produkt durch suboptimale mechanische Eigenschaften des hergestellten Produkts bemerkbar.

Das Problem von ungleichmäßiger Erwärmung stellt sich insbesondere für Absorbermaterialien, die eine deutlicher von dem Polymermaterial abweichende Dichte aufweisen. Ein spezifischer Typ solcher Absorber sind im NIR-Bereich, aber nicht oder nur in geringem Umfang im sichtbaren Bereich absorbierende Materialien, die (im Gegensatz zu Breitbandabsorbern wie Ruß) nur schwach farbige Pulver und Polymerschichten bilden. Solche Absorber werden für die Herstellung von nicht oder nur schwach gefärbten dreidimensionalen Objekten benötigt, die Absorber tendieren aber in Dry-Blends mit Polymerpartikeln auf Grund der unterschiedlichen Dichte und unterschiedlicher Polaritätseigenschaften im Vergleich zu organischen Polymeren zu einer Entmischung entweder bereits im Vorratsbehälter eines Systems zur additiven Fertigung, in dem die Partikelmischung verarbeitet wird, oder beim Ausbringen der Partikel zur Ausbildung einer Partikellage.

Es besteht daher ein Bedarf für eine Möglichkeit der Konfektionierung solcher Absorber mit Polymerpartikeln, in der eine möglichst gleichmäßige Erwärmung des Kunststoffmaterials sichergestellt werden, und eine Entmischung der Partikel mit dem Absorber bei der Verarbeitung weitgehend vermieden werden kann.

Um eine schnelle Fertigung von 3D-gedruckten Objekten zu realisieren, wurden in den letzten Jahren zudem Belichtersysteme entwickelt, in denen anstelle eines Lasers eine Vielzahl von Diodenlasern verbaut ist, um so gleichzeitig eine Vielzahl von Belichtungspunkten ansteuern und durch Belichtung mit den Lasern aufschmelzen zu können. Solche Belichtersysteme sind in der Regel so aufgebaut, dass die einzelnen Diodenlaser in einem zweidimensionalen Belichterarray angeordnet sind, die sich über die gesamte Breite des Bauraums eines 3D-Drucksystems erstreckt, und die für die selektive Belichtung der in einer Schicht aufzuschmelzenden Bereiche eines Pulverbetts über das Bett gefahren wird. Dabei wird eine möglichst hohe Fahrgeschwindigkeit des zweidimensionalen Belichterarrays angestrebt, um so die Gesamtbauzeit des herzustellenden Objekts zu minimieren. Ersichtlich ist es für eine solche Verfahrensführung entscheidend, dass Absorption des Lichts und die anschließende Übertragung der Wärme den dem Absorber auf den Kunststoff möglichst effizient erfolgt, um bei einer kurzen Belichtungszeit ausreichend Energie in den Kunststoff übertragen zu können.

Eine mögliche alternative Form der Konfektionierung von Polymerpartikeln mit Additiven stellt die Einarbeitung der Additive in das Polymermaterial dar. Eine solche gestaltet sich jedoch für NIR-Absorber z.B. in Form von Glimmerpigmenten, aufgrund der plättchenförmigen Struktur nicht als einfach umsetzbar, und zudem wurde bei den bekannten Polymerpulvern mit inkorporiertem Absorber eine unvorteilhafte Schichtanbindung bei Verarbeitung der Pulver beobachtet, die sich in gewissen Umfang nachteilig auf die Produkteigenschaften auswirkt.

Es besteht daher ein Bedarf für Kunststoffpulver, bei denen eine möglichst einheitliche Übertragung von Energie, die über ein Belichtersystem in absorbierende Materialien eingebracht wird, auf den Kunststoff sichergestellt werden kann, wobei die für das Aufschmelzen des Kunststoffs erforderliche Energie mit möglichst hoher Leistung eingebracht werden soll um eine kurze Objektbauzeit zu realisieren. Die hohe Leitung soll auf der anderen Seite aber nicht dazu führen, dass sich bei der Verarbeitung im Kunststoff Hot-spots bilden, die zu einem Abbau oder einer Verfärbung des Kunststoffs führen. Zudem soll mit dem Kunststoffpulver eine möglichst gute Anbindung von im Rahmen der Verarbeitung generierten Polymerschichten aneinander sichergestellt werden.

### Beschreibung der Erfindung

Im Rahmen der dieser Anmeldung zu Grunde liegenden Untersuchungen wurde überraschend gefunden, dass die gewünschte homogene Aufschmelzbarkeit und verbesserte Schichtanbindung durch die Verwendung von NIR-Strahlung absorbierenden Additiven in geringer Zugabemenge und mit im Vergleich zum Stand der Technik geringerer Partikelgröße realisieren lässt. Durch die geringe Partikelgröße vergrößert sich zum einen die Oberfläche, über die Energie von den Additiven auf den Kunststoff übertrage werden kann, und zum anderen vermindert sich die Energiemenge, die bei Einstrahlung von einem jeweiligen Partikel aufgenommen werden kann, so dass Energie in kürzerer Zeit/mit höherer Leitung eingestrahlt werden kann, ohne dass sich dies nachteilhaft auf die Eigenschaften des über ein solches Verfahren hergestellten Produkts auswirkt.

Im Rahmen der dieser Erfindung zu Grunde liegenden Untersuchungen wurde zudem gefunden, dass sich durch das Einbringen der NIR-Strahlung absorbierenden Additiven in die Polymerpartikel das Problem eines ungewollten Auf- oder Anschmelzens der obersten Pulverlage durch Heizstrahler, mit denen das Pulverbett nur vorgewärmt werden soll, deutlich vermindern lässt. Solche Heizstrahler werden eingesetzt, um die Verarbeitung der Kunststoffpulver bei einer Temperatur durchführen zu können, die knapp unterhalb der Schmelztemperatur der Polymere liegt, um so die für das Aufschmelzen der Polymere erforderliche Energiemenge möglichst gering halten zu können. Bei einer weniger günstigen Energieübertragung und der dadurch bedingten Verwendung höherer Absorbermengen absorbieren diese auch mehr Heizstrahlerenergie, was zu einem Anschmelzen der obersten Pulverschicht, und in der Folge zu einem instabilen Bauprozess führt.

Es wurde weiterhin wurde beobachtet, dass sich durch die Verwendung von Additiven mit geringer mittlerer Partikelgröße die Menge des für das Aufschmelzen einzubeziehenden Additivs soweit reduzieren lässt, dass nicht die gesamte eingestrahlte Energie von den Partikeln absorbiert wird, sondern ein kleinerer Teil der Energie auch unter der aufzuschmelzenden Pulverschicht erzeugte schon "verdichtete" Schichten erreichen kann. Auf diese Weise können auch im Rahmen der Herstellung eines dreidimensionalen Objekts schon erzeugten verschmolzenen Bereiche, die an die oberste Schicht angrenzen, wieder angeschmolzen werden, und sich in der Folge mit der neuen geschmolzenen Schicht besser verbinden. Auf diese Weise kann entsprechende eine gute Anbindung der Schichten miteinander erzielt und dadurch dreidimensionale Polymerobjekte mit verbesserten mechanischen Eigenschaften hergestellt werden.

Demzufolge betrifft die vorliegende Erfindung in einem ersten Aspekt ein Kunststoffpulver zur Verwendung als Aufbaumaterialmittel zur additiven Herstellung eines dreidimensionalen Objekts durch Einwirken einer von elektromagnetischer Strahlung, wobei das Kunststoffpulver inkorporierte Partikel eines hellen NIR-Strahlung absorbierenden Materials mit einer mittleren Partikelgröße D50, wie bestimmt mittels Laserbeugung, von ≤ 10 µm, in einer Menge von 0,01 bis 1,4 Gew.-% enthält.

Die Angabe "inkorporiert" bedeutet im Kontext der hier beschriebenen Erfindung, dass der überwiegende Anteil der Partikel des NIR-Strahlung absorbierenden Materials (d.h. mehr als 70%, bevorzugt mehr als 80% und weiter bevorzugt mehr als 90 %, bezogen auf das Gewicht), vollständig von der Polymermatrix umhüllt sind. "Vollständig umhüllt", bedeutet, dass diese Partikel, wenn die Kunststoffpartikel mikroskopisch untersucht werden, nicht im Kontakt mit der Oberfläche der Polymerpartikel stehen.

"Hell" bedeutet im Kontext der hier beschriebenen Erfindung im Zusammenhang mit der Farbe des NIR-Strahlung absorbierenden Materials, dass das Material in Pulverform eine Helligkeit (L) von mindestens 10 gemäß dem CIE-Lab L*a*b Farbmodell, wie spektralphotometrisch bestimmt gemäß DIN EN ISO 11664-4, aufweist. Dadurch unterscheiden sich die erfindungsgemäß verwendeten die NIR-Strahlung absorbierenden Materialien von schwarzem Ruß, der bzw. die eine Helligkeit (L) gemäß dem CIE-Lab L*a*b Farbmodell von 0 aufweist, oder Kohlenstoffnanoröhrchen.

Die Vorgabe "Partikelgröße D50, wie bestimmt mittels Laserbeugung, von ≤ 10 µm" schließt größere Partikel aus, die bei herzustellenden Schichtdicken in der Größenordnung 30 bis 60 µm nur geringfügig kleiner wären als die zu verfestigenden Kunststoffpartikel. Zudem lässt sich mit kleineren Partikeln eine bessere homogene Verteilung der Partikel im Kunststoffpulver erreichen, was ein Aufschmelzen unter Einsatz von weniger Energie für die Bestrahlung (oder höheren Energiemengen bei kürzerer Belichtungszeit) erlaubt und der Bildung von Hot-spots im Nahbereich um die NIR-Strahlung absorbierenden Partikel entgegenwirkt. Durch diese Maßnahmen kann insgesamt eine gute Verarbeitbarkeit des Kunststoffpulvers in einem Sinterverfahren erreicht werden.

Die Partikelgröße bezeichnet im Kontext der hier angegebenen Erfindung die mittels Laserbeugung gemäß ISO 13320-1 bestimmte Partikelgröße. Als Gerät für die Bestimmung der Partikelgröße kann beispielsweise ein CILAS 1064 Gerät eingesetzt werden.

NIR-Strahlung bezeichnet im hier beschriebenen Kontext insbesondere elektromagnetische Strahlung mit einer Wellenlänge im Bereich von 500 nm bis 1500 nm.

Die optimale absolute Menge des hellen NIR-Strahlung absorbierenden Materials ist, von der Effektivität des Materials abhängig, mit der dieses die eingestrahlte Strahlung zu absorbieren und in Wärme umzuwandeln kann. Als grober Richtwert wird eine günstige Absorption dabei mit NIR-Strahlung absorbierenden Materialmengen im Bereich von mindestens 0,05 Gew.-% und/oder höchstens 1,2 Gew.-%, bezogen auf das Gesamtgewicht des Kunststoffpulvers erreicht. Als weiter bevorzugte Mengenanteile können Anteile von mindestens 0,1 Gew.-% und/oder höchstens 1,0 Gew.-% und noch weiter bevorzugt mindestens 0,2 Gew.-% und/oder höchstens 0,8 Gew.-% angegeben werden.

Insbesondere durch eine kleine Partikelgröße des hellen NIR-Strahlung absorbierenden Material kann eine geeignet homogene Verteilung des Materials in dem Kunststoffpulver erreicht werden, was auch den Einsatz geringerer Anteile des Materials ermöglicht. Bevorzugt ist es demzufolge, wenn das helle NIR-Strahlung absorbierende Material eine Partikelgröße D50 von weniger als 5 µm, weiter bevorzugt weniger als 2 µm und noch weiter bevorzugt von 1 µm oder weniger aufweist. Nach unten ist die Partikelgröße durch die technisch erreichbare und wirtschaftlich sinnvolle minimale Partikelgröße beschränkt, wobei aus Gründen der Verfügbarkeit eine minimale Partikelgröße von mindestens etwa 20 nm und bevorzugt mindestens etwa 100 nm als besonders geeignet angegeben werden kann. Helle NIR-Strahlung absorbierende Materialien mit einer Partikelgröße in diesem Bereich sind z.B. LaB₆ (mit einer Primärpartikelgröße < 100 nm und einer Aggregatpartikelgröße von > 500 nm) oder Fabulase ^{®} 322 ((Di)Kupferhydroxidphosphat) mit einer mittleren Partikelgröße D50 von etwa 3,5 µm oder etwa 0,6 µm, oder Iriotec^{®} 8850 (von Merck) mit einer Partikelgröße D80 von ≤ 1 µm.

Für das erfindungsgemäße Kunststoffpulver ist es weiterhin von Vorteil, wenn die hellen NIR-Strahlung absorbierenden Materialpartikel ein niedriges Aspektverhältnis aufweisen, so dass die Partikel nicht deutlich länger als breit sind, und in der Regel nicht als Plättchen oder Stäbchen vorliegen. Für eine Plättchenform hat sich gezeigt, dass eine homogene Verteilung der Materialpartikel in dem Polymermaterial schwieriger zu realisieren ist, da die Plättchen aufgrund der verschiedenen Polarität im Vergleich zu den Kunststoffpartikeln aneinander haften bleiben können. Da dieser Effekt bei Partikeln mit einem geringeren Aspektverhältnis weniger ausgeprägt ist, ist es bevorzugt, wenn die Partikel des hellen NIR-Strahlung absorbierenden Materials ein Aspektverhältnis von weniger als 10, bevorzugt weniger als 5, weiter bevorzugt weniger als 3 und noch weiter bevorzugt weniger als zwei aufweisen. Das Aspektverhältnis bezeichnet dabei den Quotienten aus dem Mittelwert der größten Ausdehnung der Partikel/ Mittelwert der kleinsten Ausdehnung der Partikel und kann mittels mikroskopischer Methoden bestimmt werden.

Wie vorstehend erwähnt weist das helle NIR-Strahlung absorbierende Material eine Farbe auf, die sich deutlich von Ruß absetzt. In einer bevorzugten Ausführungsform weist das helle NIR-Strahlung absorbierende Material eine Helligkeit bestimmt gemäß dem CIE-Lab Farbmodell, wie spektralphotometrisch gemessen (gemäß DIN EN ISO 11664-4), von 25 oder mehr, weiter bevorzugt von 50 oder mehr, noch weiter bevorzugt von 60 oder mehr und noch weiter bevorzugt von 70 oder mehr auf. Alternativ oder zusätzlich ist es bevorzugt, wenn das helle NIR-Strahlung absorbierende Material ein anorganisches Pigment, z.B. auf Basis von (Di)Kupferhydroxidphosphat, (Sn/Sb)O oder LaB₆, umfasst oder ist. Ein "anorganischen Pigment" bezeichnet dabei eine partikelförmige Substanz, die sich nicht in einem organischen Polymer lösen lässt, und Atome enthält, die sich nicht in organischen Verbindungen finden (d.h. andere Atome als C, H, N, S oder P). Pigmente können weiß oder farbig sei (solange sich dadurch ein helles NIR-Strahlung absorbierenden Materials gemäß der Definition oben ergibt).

Bei dem Kunststoff, der die Basis des erfindungsgemäßen Kunststoffpulvers bildet, kann es sich grundsätzlich um jeden thermoplastischen Kunststoff handeln, der mittels pulverbasierter Verarbeitungsverfahren zu dreidimensionalen Objekten verarbeitet werden kann.

Geeignete thermoplastische Kunststoffe können aus der aus Homopolymeren, Copolymeren und Polyblends (auch bekannt als Polymer-Blends) bestehenden Gruppe ausgewählt werden. Unter einem Polyblend (auch als "Polymerblend" bezeichnet) wird eine Mischung aus zwei oder mehreren unterschiedlichen Polymeren verstanden. Bei einem Polyblend kann es sich um ein einphasiges Polyblend (homogenes Polyblend) oder mehrphasiges Polyblend (heterogenes Polyblend) handeln. Bei einem mehrphasigen Polyblend werden mittels dynamischer Differenzkalorimetrie typischerweise mehrere Glasübergänge beobachtet.

Ferner können bei einem mehrphasigen Polyblend mittels dynamischer Differenzkalorimetrie mehrere Schmelzpeaks entsprechend den Schmelzpunkten der einzelnen Phasen beobachtet werden.

Das erfindungsgemäße Kunststoffpulver enthält als Kunststoff ein thermoplastisches Polymer, dass insbesondere aus Polyaryletherketon (PAEK), Polyarylethersulfon (PAES), Polyamiden, Polyestern, Polyethern, Polylactiden (PLA), Polyolefinen, Polystyrolen, Polyphenylensulfiden, Polyvinylidenfluoriden, Polyphenylenoxiden, Polyimiden, Polyetherimiden, Polycarbonaten, und Copolymeren, die mindestens eines der vorangehenden Polymere bzw. deren Monomereinheiten einschließen, sowie Polymerblends einer oder mehrerer der genannten Polymere oder Copolymere davon, ausgewählt werden kann, wobei die Auswahl jedoch nicht auf die oben genannten Polymere sowie Copolymere und Polymerblends davon beschränkt ist. Der Begriff "Polymere" kann auch Oligomere mit zyklischer oder ringförmiger molekularer Struktur umfassen. Ein Beispiel für ein derartiges Oligomer stellt CBT (cyclic butylen terephtalate) zur Herstellung von PBT (Polybutylenterephtalat) dar.

Geeignete PAEK-Polymere und -Copolymere werden beispielsweise aus der aus Polyetheretherketon (PEEK), Polyetherketonketon (PEKK), Polyetherketon (PEK), Polyetheretherketonketon (PEEKK), Polyetherketonetherketonketon (PEKEKK), Polyaryletheretheretherketon (PEEEK) und Copolymeren, die mindestens eines der vorgenannten Polymere einschließen, bestehenden Gruppe ausgewählt.

Geeignete Polyamid-Polymere oder -Copolymere können aus der Gruppe ausgewählt werden, die aus Polamid 6/6T, Polyamidelastomeren wie Polyetherblockamide wie z.B. PEBAX^{™}-basierte Materialien, Polyamid 6, Polyamid 66, Polyamid 11, Polyamid 12, Polyamid 612, Polyamid 610, Polyamid 1010, Polyamid 1012, Polyamid 1212, Polyamid PA6T/66, PA4T/46 und Copolymeren, die mindestens eines der vorgenannten Polymere einschließen besteht.

Geeignete Polyesterpolymere oder Copolymere können aus Polyalkyl-enterephthalaten (z.B. PET, PBT) und deren Copolymeren ausgewählt werden. Geeignete Polyolefinpolymere oder -Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden. Geeignete Polyimidpolymere oder - Copolymere können aus der aus Polyarylamid, Polybismaleinimid und insbesondere Polyetherimid (PEI) bestehenden Gruppe ausgewählt werden.

Im Rahmen der Erfindung sind Polyamid-Polymere oder -Copolymere bevorzugt, insbesondere Polyamid 12, Polyamid 11 und/oder Polyamid 1012 und/oder ein Copolymer, das mindestens eines der vorangehenden Polymere bzw. deren Monomereinheiten einschließt, und/oder zumindest einem Polymerblend, das zumindest eines der genannten Polymere oder Copolymere umfasst.

In einer Ausführungsform der Erfindung umfassen die Kunststoffpartikel als Polymermaterial Polymere oder Copolymere oder Blends von PAEK, Polyamid, Polypropylen oder Polyetherimid, wobei das PAEK bevorzugt PEEK, PEKK, PEK, PEEKK, PEKEKK und/oder PEEEK ist und das bevorzugte Polyamid Polyamid 12 und/oder Polyamid 11 ist. Ferner genügen die aus diesen Polymermaterialien gefertigten Formkörper den hohen Anforderungen, die bezüglich der mechanischen Beanspruchung gestellt werden.

Die vorliegende Erfindung eignet sich, wie erwähnt, auch für den Einsatz von Polyblends.

Neben dem Kunststoff, bzw. Polymer kann das erfindungsgemäße Kunststoffpulver weitere übliche Zusatzstoffe enthalten, wie beispielsweise Füllstoffe und Verstärkungsfasern, solange durch den Einbezug solcher Zusatzstoffe die Eigenschaft einer "hellen Farbgebung" der Partikel nicht beeinträchtigt wird.

Solche optionalen Zusatzstoffe sind z.B. Reflexionspartikel, z.B. das als Weißpigment bekannte Titandioxid. Durch die Verwendung von Titandioxid können Bauteile mit einer (im Vergleich zu Bauteilen ohne Titandioxid) homogeneren Farbe erhalten werden. Vorzugsweise liegt der Gewichtsanteil der Reflexionspartikel am Gesamtgewicht des Kunststoffpulvers zwischen 0,1 % und 10,0 %, bevorzugt bei mindestens 0,3 % und/oder höchstens 2 %, wobei die Mengenangaben auf das Gesamtgewicht des Pulvers bezogen sind.

Verwendbare Füllstoffe und/oder Verstärkungsfasern sind z.B. Glas, z.B. in Form von Glaskugeln oder Glasfasern oder Aramidfasern. Enthalten die erfindungsgemäßen Kunststoffpulver Füllstoffe und/oder Verstärkungsfasern, so ist es bevorzugt, wenn der Anteil des thermoplastischen Kunststoffs mindestens 20 Gew.-%, weiter bevorzugt zu mindestens 40 Gew.-%, und noch weiter bevorzugt mindestens Gew.-60 %, bezogen auf die Gesamtmasse des Kunststoffpulvers ausmacht. In einer Ausführungsform enthält das erfindungsgemäße Kunststoffpulver keine Füllstoffe und/oder Verstärkungsfasern.

Zudem können dem erfindungsgemäßen Kunststoffpulver Additive zur Verbesserung der Verarbeitungseigenschaften zugesetzt sein, z.B. Mittel zur Modifikation der Rieselfähigkeit oder antistatische Mittel. Ein als Rieselhilfe geeignetes Additiv ist z.B. pyrogene Kieselsäure. Der Anteil der Rieselhilfe kann meist sehr gering ausfallen, d.h. in den meisten Fällen ist es ausreichend, wenn die Rieselhilfe in einer Menge von weniger als 0,5 Gew.-% und insbesondere weniger als 0,1 Gew.-% in das Kunststoffpulver einbezogen wird.

In einem weiteren Aspekt betrifft die vorliegende Erfindung ein Verfahren zur Herstellung eines Kunststoffpulvers mit inkorporiertem NIR-Strahlung absorbierenden Material, wie vorstehend angegeben, wobei das Verfahren die Schritte
(i) Bereitstellen von Kunststoffmaterial und Partikeln des NIR-Strahlung absorbierenden Materials, und
(ii) Inkorporieren der Partikel des NIR-Strahlung absorbierenden Materials in das Kunststoffmaterial unter Ausbildung von Kunststoffpartikeln umfasst.

Hinsichtlich der Art und Weise, wie die Partikel des NIR-Strahlung absorbierenden Materials in das Kunststoffmaterial inkorporiert werden, unterliegt das angegebene Verfahren keinen relevanten Beschränkungen, solange ein Pulverprodukt erhalten wird, bei den die Partikel des NIR-Strahlung absorbierenden Materials möglichst homogen in den Kunststoffpartikeln verteilt vorliegen. Dies kann z.B. durch Extrudieren einer Mischung aus dem Kunststoff und dem NIR-Strahlung absorbierenden Material und anschließende Vermahlung, durch Schmelzedispergierung des Kunststoffs mit dem NIR-Strahlung absorbierenden Material, durch Extrusion/Spinnen von Fäden aus einem Gemisch des Kunststoffs und des NIR-Strahlung absorbierenden Material, durch Fällung eines solchen Gemisch oder durch Liquid-Liquid Phasenseparation, oder durch andere dem Fachmann bekannte Techniken und Maßnahmen realisiert werden.

In einem beispielhaften Herstellungsverfahren kann das Inkorporieren der Partikel Partikel des NIR-Strahlung absorbierenden Materials in das Kunststoffmaterial dadurch erfolgen, dass zunächst eine Schmelze des Kunststoffs, die zusätzlich Partikel des NIR-Strahlung absorbierenden Materials enthält, in geschmolzenem Polyethylenglycol dispergiert wird. Die erkaltete Dispersion wird anschließend zu einem Pulver verarbeitet, indem mit Wasser oder einem anderen Lösungsmittel, das Polyethylenglycol lösen kann, aber das Polymer der Kunststoffpartikel nicht löst, PEG ausgewaschen wird, um auf diese Weise das Polyethylenglycol aus dem Pulver zu entfernen. Optional kann das so erzeugte Kunststoffpulver im Anschluss von Wasser abzentrifugiert und getrocknet werden.

Das angegebenen Kunststoffpulver mit darin inkorporiertem NIR-Strahlung absorbierenden Material kann vorteilhaft für die Herstellung von dreidimensionalen Objekten verwendet werden, die über die selektive Verfestigung einzelner Schichten des Objekts in einem iterativen Herstellungsprozess aufgebaut werden, wobei in jedem einzelnen Prozessschritt eine Schicht des Kunststoffpulver ausgebracht und durch selektives Verfestigen von Teilen der Schicht, die in einem herzustellenden Objekt liegen, zu dem Objekt zusammengefügt werden.

Demzufolge betrifft eine weiterer Aspekt der vorliegenden Erfindung ein Verfahren zur Herstellung eines dreidimensionalen Objekts durch selektives Verfestigen eines pulverförmigen Aufbaumaterials an den dem Querschnitt des dreidimensionalen Objekts in der jeweiligen Schicht entsprechenden Stellen durch Einwirkung von Strahlung, wobei als Aufbaumaterial ein Kunststoffpulver wie es im vorstehenden beschrieben wurde verwendet wird und wobei das Aufbaumaterial durch Einwirkung von elektromagnetischer Strahlung, die durch eine Strahlungsquelle emittiert wird, selektiv verfestigt wird. In einer bevorzugten Ausführungsform erfolgt die Verfestigung dabei durch Einwirken von elektromagnetischer Strahlung, und ganz besonders bevorzugt von NIR-Strahlung.

Die Verfestigung kann insbesondere durch Einwirkung von elektromagnetischer Strahlung in einer im NIR gelegenen Wellenlänge oder Wellenlängenbereich auf das Kunststoffpulver erfolgen, bei dem dieses zumindest teilweise an- oder aufgeschmolzen und anschließend abgekühlt wird, wobei sich ein fester Verbund bildet. Eine geeignete im NIR gelegenen Wellenlänge oder Wellenlängenbereich liegt im Bereich von 500 bis 1500 nm und insbesondere bei 980±7 nm und/oder 940±7 nm und/oder 810±7 nm und/oder 640±7 nm und/oder 1064±7 nm.

Wenn das Verfahren so ausgestaltet ist, dass das Verfestigen eines pulverförmigen Aufbaumaterials durch Einwirken von NIR-Strahlung realisiert wird, kann anstelle des hellen Absorbers im Kunststoffpulver auch ein nicht heller Absorber wie Ruß eingesetzt werden. Eine Ausführungsform, in der anstelle eines hellen NIR-Strahlung absorbierenden Materials daher ein nicht helles NIR-Strahlung absorbierendes Material eingesetzt wird, das in das Kunststoffpulver inkorporiert ist, wird an dieser Stelle ausdrücklich offenbart. Ein nicht helles NIR-Strahlung absorbierendes Material ist im Kontext der hier beschriebenen Erfindung ein Material, das in Pulverform eine Helligkeit (L) von weniger als 10 gemäß dem CIE-Lab L*a*b Farbmodell, wie spektralphotometrisch bestimmt gemäß DIN EN ISO 11664-4, aufweist.

Die Menge der eingestrahlten Energie, die auf eine Stelle im Querschnitt des zu erzeugenden dreidimensionalen Objekts aufgebracht wird um diese zu verfestigen, ist vorzugsweise im Bereich 0,02 J/mm³ bis 2,5 J/mm³, weiter bevorzugt und mindestens 0,05 J/mm³ und/oder höchstens 1,0 J/mm³ einzustellen. Darüber hinaus ist es bevorzugt, wenn die eingestrahlte Energiemenge so auf das verwendete Kunststoffpulver (mit dem dort eingestellten Gehalt des NIR-Strahlung absorbierenden Materials) eingestellt wird, dass durch die eingestrahlte Energie die oberste Pulverschicht aufgeschmolzen und ein Teil des darunter befindlichen Kunststoffmaterials angeschmolzen wird, und so bei Abkühlen eine gute Anbindung der neu generierten Schicht an darunterliegende Schichten zu realisieren.

Zudem ist es günstig, wenn das Kunststoffpulver vor dem Verfestigen auf eine Temperatur, die höchstens 30°C, bevorzugt höchstens 20°C und weiter bevorzugt höchstens 15°C und/oder mindestens 5°C geringer ist als die Schmelztemperatur des dem Kunststoffpulver zugrundeliegenden Kunststoffs erhitzt wird, da dadurch die einzustrahlende Energiemenge gering gehalten und das Risiko für Hotspots durch inhomogen in dem Kunststoffpulver verteilte Partikel des NIR-Strahlung absorbierenden Materials reduziert wird.

Ein weiterer Aspekt der vorliegenden Erfindung betrifft ein dreidimensionales Objekt, das nach dem vorstehend beschriebenen Verfahren herstellbar oder hergestellt oder durch selektives Verfestigen eines pulverförmigen Aufbaumaterials an den dem Querschnitt des dreidimensionalen Objekts in der jeweiligen Schicht entsprechenden Stellen durch Einwirkung von Strahlung hergestellt ist, insbesondere durch Einwirkung von NIR-Strahlung, wobei als Aufbaumaterial ein Kunststoffpulver gemäß dem vorstehend beschriebenen ersten Aspekt verwendet wurde. Ein derart hergestelltes Objekt zeichnet sich durch eine verbesserte Schichtanbindung aus, die sich insbesondere in verbesserten mechanischen Eigenschaften orthogonal zur Schichtenfolge im Objekt zeigt.

Ein noch weiterer Aspekt der vorliegenden Erfindung stellt ein System dar, welches zur Herstellung von dreidimensionalen Objekten durch selektives Verfestigen des erfindungsgemäßen pulverförmigen Aufbaumaterials an den dem Querschnitt des dreidimensionalen Objekts in der jeweiligen Schicht entsprechenden Stellen durch Einwirkung von Strahlung, bevorzugt von NIR-Strahlung dient. Erfindungsgemäß weist das System mindestens eine Strahlungsquelle, die ausgebildet ist, um elektromagnetische Strahlung, insbesondere spezifisch in einer im NIR gelegenen Wellenlänge oder Wellenlängenbereich, zu emittieren, eine Prozesskammer, die als offener Behälter mit einer Behälterwandung ausgeführt ist, einen in der Prozesskammer befindlichen Träger, wobei Prozesskammer und Träger gegeneinander in vertikaler Richtung beweglich sind, einen Vorratsbehälter und einen in horizontaler Richtung bewegbaren Beschichter auf. Der Vorratsbehälter ist zumindest teilweise mit dem erfindungsgemäßen Kunststoffpulver als Aufbaumaterial befüllt.

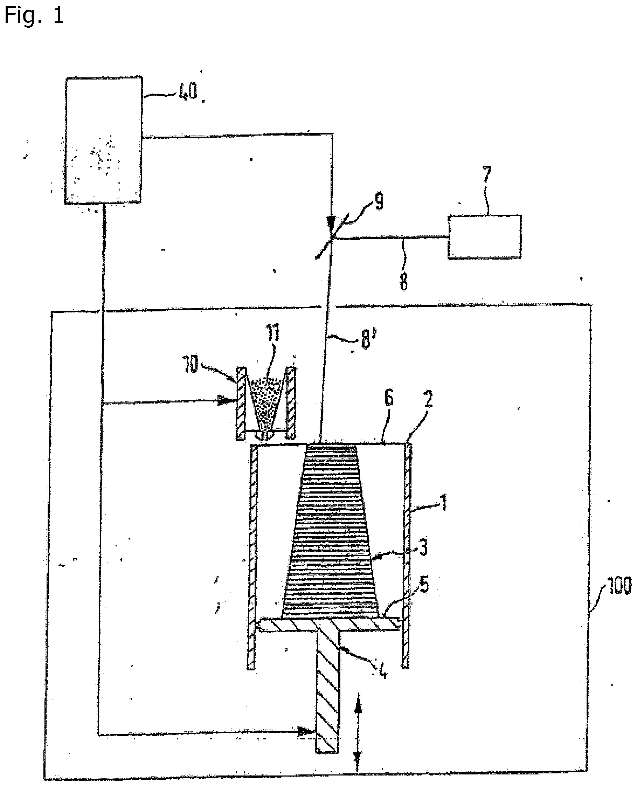

Ein solches System ist in Figur 1 beispielhaft beschrieben:
Figur 1 zeigt schematisch eine Lasersintervorrichtung mit einem Laserstrahl und einem Ablenkspiegel, wie sie bei Verwendung eines CCL-Lasers üblich ist, mit der ein Verfahren zur schichtweisen Herstellung eines dreidimensionalen Objekts durchgeführt werden kann. Diese Vorrichtung weist einen Behälter 1 auf, der nach oben offen ist und nach unten durch einen Träger 4 zum Tragen eines zu bildenden Objektes 3 begrenzt wird. Durch den oberen Rand 2 des Behälters (bzw. seiner Seitenwände) wird eine Arbeitsebene 6 definiert. Das Objekt befindet sich auf der Oberseite des Trägers 4 und wird aus einer Mehrzahl sich parallel zu der Oberseite des Trägers 4 erstreckender Schichten aus einem mittels elektromagnetischer Strahlung verfestigbaren, pulverförmigen Aufbaumaterial gebildet. In der hier beschriebenen Erfindung ist das verfestigbare, pulverförmige Aufbaumaterial das erfindungsgemäße Kunststoffpulver. Der Träger ist über eine Höheneinstellvorrichtung in vertikaler Richtung, d.h. parallel zu der Seitenwand des Behälters 1 verschiebbar. Damit kann die Position des Trägers 4 relativ zur Arbeitsebene 6 eingestellt werden.

Oberhalb des Behälters 1 bzw. der Arbeitsebene 6 ist eine Aufbringvorrichtung 10 zum Aufbringen des zu verfestigenden Pulvermaterials 11 auf die Trägeroberfläche 5 oder eine zuletzt verfestigte Schicht vorgesehen. Weiterhin ist oberhalb der Arbeitsebene 6 eine Bestrahlungseinrichtung in Form eines Lasers 7 angeordnet, die einen gerichteten Lichtstrahl 8 abgibt. Dieser wird über eine Ablenkeinrichtung 9, beispielsweise einen Drehspiegel, als abgelenkter Strahl 8' in Richtung der Arbeitsebene 6 gelenkt. Diese Anordnung ist für ein Laser-Sinter-System mit einem CO₂-Laser üblich, für eine Bearbeitung von erfindungsgemäßen Kunststoffpulvern aber so ausgestallten, dass Licht mit einer Wellenlänge im NIR-Bereich emittiert wird. Eine Steuereinheit 40 ermöglicht die Steuerung des Trägers 4, der Aufbringungsvorrichtung 10 und der Ablenkeinrichtung 9. Die Elemente 1 bis 6, 10 und 11 sind innerhalb des Maschinenrahmens 100 angeordnet.

Bei der Herstellung des dreidimensionalen Objektes 3 wird das Pulvermaterial 11 schichtweise auf den Träger 4 bzw. eine zuvor verfestigte Schicht aufgetragen und mit dem Laserstrahl 8' an den dem Objekt entsprechenden Stellen einer jeden Pulverschicht verfestigt. Der Träger wird nach jeder selektiven Verfestigung einer Schicht um die Dicke der als nächstes aufzutragenden Pulverschicht abgesenkt.

Zum schichtweisen Aufschmelzen des erfindungsgemäßen Kunststoffpulvers werden passende Verfahrens- bzw. Systemparameter ausgewählt. Neben dem einzustellenden Anteil des NIR-absorbierenden Materials werden insbesondere die Schichtdicke, die Laserleistung und die Belichtungsgeschwindigkeit gezielt ausgewählt.

In einer bevorzugten Ausführungsform der Erfindung wird die elektromagnetische Strahlung spezifisch im NIR-Bereich innerhalb eines Fensters von nicht mehr als 50 nm (λ2 - λ1 < 50 nm), vorzugsweise nicht mehr als 40 nm, weiter bevorzugt nicht mehr als 30 nm und insbesondere nicht mehr als 20 nm emittiert. Dadurch ist es möglich, dass das erfindungsgemäße Kunststoffpulver weitere Stoffe umfassen kann, die aufgrund ihres Absorptions- oder Reflexionsvermögens in einem ersten Teilbereich des NIR-Bereichs stören würden. Durch Wahl eines relativ engen Wellenbereichs außerhalb des ersten Teilbereichs kann der störende Einfluss verringert oder verhindert werden.

In einer bevorzugten Ausführungsform der Erfindung emittiert die Strahlungsquelle elektromagnetische Strahlung spezifisch bei einer oder mehreren Wellenlängen im Bereich von 500-1500 nm, insbesondere bei einer oder mehreren Wellenlängen im Bereich 600 bis 1100 nm, und ganz besonders bevorzugt in einer oder mehreren der nachfolgenden Wellenlängen: 980±7 nm und/oder 940±7 nm und/oder 810 ±7 nm und/oder 640±7 und/oder 1064±7 nm. Bevorzugt emittiert die Strahlungsquelle bei 980±7 nm.

In einer bevorzugten Ausführungsform der Erfindung umfasst die Strahlungsquelle mindestens einen Laser, vorzugsweise eine oder mehrere Laserdioden. Die Laserdioden können dabei zellenförmig oder versetzt angeordnet sein. Ebenso ist es möglich, die Laserdioden in einem 2-dimensionalen Array anzuordnen. Es kann sich um einen Kantenemitter handeln. Vorzugsweise handelt es sich um einen Oberflächenemitter (VCSEL oder Philips-VCSEL). Durch eine Zeilenbelichtung lassen sich hohe Baugeschwindigkeiten erzielen. Zudem ermöglicht die Verwendung von Laserdioden einen hohen Wirkungsgrad und senkt die Energiekosten.

Geeignete Laserdioden arbeiten üblicherweise mit einer Leistung zwischen 0,1 und 500 Watt, bevorzugt mit mindestens 1,0 Watt und/oder höchstens 100 Watt. Der Fokus des Laserstrahls kann einen Radius zwischen 0,02 mm und 0,5 mm, bevorzugt von mindestens 0,04 mm und/oder höchstens 0,2 mm haben. Die Belichtungsgeschwindigkeit, d.h. die Geschwindigkeit des Laserfokus relativ zur Bauebene, beträgt üblicherweise zwischen 10 mm/s und 10000 mm/s, bevorzugt mindestens 100 mm/s und/oder höchstens 5000 mm/s, und noch weiter bevorzugt mindestens 200 mm/s bis höchstens 2000 mm/s.

Im Rahmen der vorliegenden Erfindung haben die Begriffe "umfassend" oder "enthaltend" sowie deren grammatikalischen Abwandlungen nachfolgende Bedeutungen: In einer Ausführungsform können neben den genannten Elementen weitere Elemente enthalten sein. In einer anderen Ausführungsform sind im Wesentlichen nur die genannten Elemente enthalten. Mit anderen Worten können die Begriffe neben ihrer herkömmlichen Bedeutung in einer besonderen Ausführungsform gleichbedeutend mit dem Begriff "im Wesentlichen bestehend aus" oder "bestehend aus" sein.

Die nachfolgenden Beispiele dienen zur Veranschaulichung und sind nicht als einschränkend zu verstehen. Sie definieren weitere bevorzugte Ausführungsformen der Erfindung.

### Beispiele

### Beispiel 1: Herstellung eines Kunststoffpulvers auf Basis von Polyamid 12 mit Iriotech^{®} 8850 als Absorber

In einem Extruder wurde Polyamid 12 mit 0,75 Gew.-% Iriotech^{®} 8850 (Gemisch aus 35-55 Gew.-% ((Sn/Sb)O₂) und 45 bis 65 Gew.-% TiO₂, Partikelgröße D80 ≤ 1 µm) gemischt und zu einem Strangprodukt verarbeitet. In der Folge wurde dieses Produkt mittels eines Zweischnecken-Extruders kompoundiert und mit PEG 20.000 und 35.000 in einem Verhältnis von 40:30:30 bei 230-250°C coextrudiert. Das Extrudat wurde auf einem Träger aufgefangen und erstarren lassen. und das Extrudat wurde in einem weitere Schritt in warmem Wasser (>60°C) gelöst und die Polymerpartikel mittels einer Zentrifuge abgetrennt und gewaschen, wobei ein Endprodukt mit einer Partikelgröße D50 von 35 µm erhalten wurde. Das getrocknete Pulver wurde für eine bessere Verarbeitbarkeit mit 0,4% eines Rieselhilfsmittels versetzt und im Verhältnis 3:1 mit einem TiO₂ enthaltenden PA12 Pulver trocken vermischt.

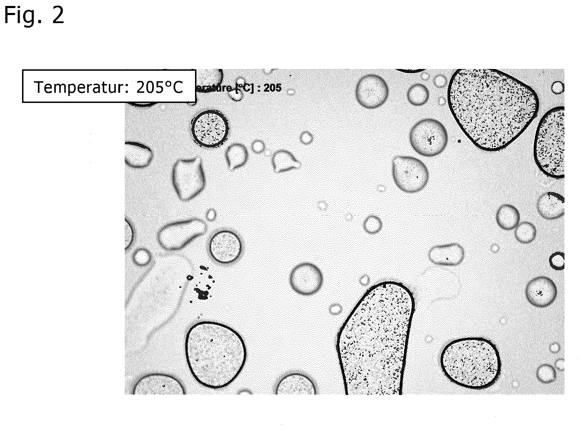

Beim Aufschmelzen der so erzeugten Pulverpartikel mittels Heiztischmikroskopie konnte eine homogene Verteilung der Iriotech^{®} 8850 und TiO₂ Partikel in dem Polyamid 12 beobachtet werden (sh. Figur 2).

### Beispiel 2 (nicht erfindungsgemäß): Verarbeitung des in Beispiel 1 hergestellten Materials und vergleich mit einem entsprechenden Dry-Blend

Zu Vergleichszwecken wurde eine Mischung desselben Polyamids wie in Beispiel 1 mit 5% eingemischtem Iriotech^{®} 8850 als Dry-Blend hergestellt.

Die Materialien wurden als Einzelschicht auf ein Substrat aufgebracht, und bei einer Bauraumtemperatur von 165°C mit einem VCSEL-Belichter mit einem mit einem Volumenenergieeintrag von 0,17 - 0,4 J/mm³ belichtet, wobei die Einzelschichten zu Plättchen verschmolzen sind.

Für das Pulver gemäß Beispiel 1 (0,75 Gew.-% Absorberanteil) wurden dabei im gesamten Bereich des Energieeintrags stabile Produktplättchen erhalten. Bei der beschriebenen Vergleichsmischung mit einem erheblich höheren Anteil an hellem NIR-Strahlung absorbierenden Material (5 Gew.-%), bei dem diese Materialien trocken mit den Kunststoffpartikeln gemischt waren, wurde hingegen nur mit einem Volumenenergietrag von circa 0,33 J/mm³ und größer stabile Plättchen erhalten.

Ersichtlich kann daher bei der hohen Belichtungsgeschwindigkeit trotz des deutlich höheren Anteils als in dem Kunststoffpulver enthaltenem Absorber kein gutes Aufschmelzen der Partikel realisiert werden.

### Beispiel 3:

Zur Herstellung des erfindungsgemäßen Pulvers wurde PA12 (Vestamid L1700, Fa. Evonik) mit 0,75 Gew.-% des Absorbers Iriotec 8850 (Fa. Merck, Primärpartikelgröße < 1 µm) mittels eines Zweischnecken-Extruders compoundiert und mit PEG 20.000 in einem Verhältnis von 40:60 bei 230-250°C coextrudiert. Das Extrudat wurde in kaltem Wasser aufgefangen und die Lösung später mit heißem Wasser (>60°C) verdünnt und die Polymerpartikel mittels einer Zentrifuge abgetrennt und gewaschen. Das getrocknete Pulver wurde für eine bessere Verarbeitbarkeit mit 0,1% eines Rieselhilfsmittels versetzt. Analog wurde ein Vergleichsmaterial mit 0,75 Gew.-% des Absorbers Iriotec 8820 (Fa. Merck, Primärpartikelgröße < 15 µm) hergestellt.

Die Helligkeit (CIELab Farbmodell) des entstandenen Pulvers wurde mit 87 bestimmt. Die Absorption einer Pulverschicht mit einer Dicke von ca. 10 mm bei 980 nm liegt bei 25%. Für das Vergleichsmaterial wurde eine Helligkeit von 88 und eine Absorption bei 980 nm von 22% bestimmt.

Für Prozesstests wurden die Materialien auf einem EOS P500 LPF System bei einer Prozesskammertemperatur von 165°C bzw. 163°C (für das Vergleichsmaterial), einer Entnahmekammertemperatur von 140°C und einer Bauplattformtemperatur von 165°C zu Plättchen mit ca. 5 Schichten (0,1 mm Schichtdicke) mit einem Volumenenergieeintrag von 0,33 J/mm³ verbaut. Die resultierenden Plättchen sind aus dem erfindungsgemäßen Kunststoffpulvers mit dem Absorber Iriotec^{®} 8850 waren homogen und gut verschmolzen. Mikroskopische Aufnahmen des Querschnitts zeigten ein porenfreies Bauteil ohne einzeln erkennbare Partikel im Volumen.

Das aus dem Vergleichsmaterial hergestellte Bauteil war demgegenüber signifikant schlechter verschmolzen. In der Mikroskopieaufnahme waren im kompletten Querschnitt einzelne, schlecht miteinander verschmolzene Partikel zu erkennen. Aufgrund der geringeren Verschmelzung ist für das Vergleichsbauteil von deutlich gegenüber dem erfindungsgemäßen Beispiel abfallenden mechanischen Eigenschaften auszugehen.

## Patentansprüche

1. Kunststoffpulver zur Verwendung als Aufbaumaterial zur additiven Herstellung eines dreidimensionalen Objekts durch Einwirken von elektromagnetischer Strahlung, bevorzugt von NIR-Strahlung, wobei das Kunststoffpulver inkorporierte Partikel eines hellen NIR-Strahlung absorbierenden Materials mit einer mittleren Partikelgröße D50, wie bestimmt mittels Laserbeugung gemäß ISO 13320-1, von ≤ 10 µm, in einer Menge von 0,01 bis 1,4 Gew.-% enthält.

2. Kunststoffpulver nach Anspruch 1, wobei das Kunststoffpulver die Partikel des hellen NIR-Strahlung absorbierenden Materials in einer Menge von mindestens 0,05 Gew.-% und/oder höchstens 1,2 Gew.-%, bevorzugt mindestens 0,1 Gew.- % und/oder höchstens 1,0 Gew.-% und weiter bevorzugt mindestens 0,2 Gew.- % und/oder höchstens 0,8 Gew.-% enthält.

3. Kunststoffpulver nach einem der Ansprüche 1 oder 2, wobei die Partikel des hellen NIR-Strahlung absorbierenden Materials eine Partikelgröße von weniger als 5 µm, bevorzugt weniger als 2 µm und besonders bevorzugt im Bereich von 1 µm bis 20 nm aufweisen.

4. Kunststoffpulver nach einem der Ansprüche 1 bis 3, wobei das helle NIR-Strahlung absorbierende Material ein anorganisches Pigment ist und/oder wobei die Partikel eine Helligkeit bestimmt gemäß dem Cielab L*a*b Farbmodell, wie spektralphotometrisch gemessen, von 25 oder mehr und bevorzugt von 50 oder mehr aufweisen.

5. Kunststoffpulver nach mindestens einem der vorangehenden Ansprüche, wobei das helle NIR-Strahlung absorbierende Material ausgewählt ist aus LaB₆, (Sn/Sb)O₂, und (Di-)Kupferhydroxidphosphat.

6. Kunststoffpulver nach mindestens einem der vorangehenden Ansprüche, wobei das Kunststoffpulver zusätzlich Reflexionspartikel mit die NIR-Strahlung zumindest teilweise reflektierender Oberfläche umfasst, wobei die Reflexionspartikel bevorzugt TiO₂ umfassen, und wobei der Gewichtsanteil der Reflexionspartikel 0,1 bis 10 %, bevorzugt mindestens 0,3 und/oder höchstens 2 %, bezogen auf das Gesamtgewicht des Kunststoffpulvers ausmacht.

7. Kunststoffpulver nach mindestens einem der vorangehenden Ansprüche, wobei das Kunststoffpulver als Kunststoff ein Polymer umfasst, dass ausgewählt ist aus zumindest einem Polyaryletherketon (PAEK), insbesondere in Form von Polyetherketonketon (PEKK), Polyarylethersulfon (PAES), Polyetherimid (PEI), Polypropylen, Polyamid, Polyester, Polyether, Polylactid, Polyolefin, Polystyrol, Polyphenylensulfid, Polyvinylidenfluoride, Polyphenylenoxid, Polyimid, insbesondere in Form von Polyetherimid, Polycarbonat, bevorzugt aus Polyamid, weiter bevorzugt aus Polyamid 12, Polyamid 11 und/oder Polyamid 1012 und/oder zumindest einem Copolymer, das mindestens eines der vorangehenden Polymere bzw. deren Monomereinheiten einschließt, und/oder zumindest einem Polymerblend, das zumindest eines der genannten Polymere oder Copolymere einschließt, und wobei das Kunststoffpulver bevorzugt aus einem dieser Polymere als Kunststoff besteht.

8. Verfahren zur Herstellung eines Kunststoffpulvers nach einem der Ansprüche 1 bis 7, wobei das Verfahren die Schritte
(i) Bereitstellen von Kunststoffmaterial und Partikeln des NIR-Strahlung absorbierenden Materials und
(ii) Inkorporieren der Partikel des NIR-Strahlung absorbierenden Materials in das Kunststoffmaterial unter Ausbildung von Kunststoffpartikeln, vorzugsweise durch Extrusion und anschließende Vermahlung, Schmelzedispergierung, Faserspinnen und Schneiden und/oder durch Fällung oder Liquid-Liquid Phasen Separation,
umfasst.

9. Verfahren zur Herstellung eines dreidimensionalen Objekts durch selektives Verfestigen eines pulverförmigen Aufbaumaterials an den dem Querschnitt des dreidimensionalen Objekts in der jeweiligen Schicht entsprechenden Stellen durch Einwirkung von Strahlung, vorzugsweise von elektromagnetischer Strahlung, besonders bevorzugt von NIR-Strahlung, wobei als Aufbaumaterial ein Kunststoffpulver nach einem der Ansprüche 1 bis 7 verwendet wird und wobei das Aufbaumaterial durch Einwirkung von elektromagnetischer Strahlung, die durch eine Strahlungsquelle emittiert wird, selektiv verfestigt wird.

10. Verfahren nach Anspruch 9, wobei eine Energiemenge im Bereich von 0,02 J/mm³ bis 2,5 J/mm³ und bevorzugt mindestens 0,05 J/mm³ und/oder höchstens 1,0 J/mm³ auf ein Volumenelement im Querschnitt des dreidimensionalen Objekts aufgebracht wird, um dieses Volumenelement zu verfestigen.

11. Verfahren nach Anspruch 9 oder 10, wobei das Aufbaumaterial für das selektive Verfestigen auf eine Temperatur erhitzt wird, die höchstens 30°C, bevorzugt höchstens 20°C und weiter bevorzugt höchstens 15°C und/oder mindestens 5°C geringer ist als die Schmelztemperatur des dem Kunststoffpulver zugrundeliegenden Kunststoffs.

12. Dreidimensionales Objekt, herstellbar oder hergestellt nach dem Verfahren gemäß mindestens einem der Ansprüche 9 bis 11 oder durch selektives Verfestigen eines pulverförmigen Aufbaumaterials an den dem Querschnitt des dreidimensionalen Objekts in der jeweiligen Schicht entsprechenden Stellen durch Einwirkung von Strahlung, insbesondere durch Einwirkung von NIR-Strahlung, wobei als Aufbaumaterial ein Kunststoffpulver nach einem der vorhergehenden Ansprüche 1 bis 7 verwendet wurde.

13. System zur Herstellung von dreidimensionalen Objekten durch selektives Verfestigen eines pulverförmigen Aufbaumaterials an den dem Querschnitt des dreidimensionalen Objekts in der jeweiligen Schicht entsprechenden Stellen durch Einwirkung von Strahlung, bevorzugt elektromagnetischer Strahlung, besonders bevorzugt von NIR-Strahlung, wobei das System mindestens eine Strahlungsquelle, die ausgebildet ist, um elektromagnetische Strahlung spezifisch in einer im NIR gelegenen Wellenlänge oder Wellenlängenbereich zu emittieren, eine Prozesskammer, die als offener Behälter mit einer Behälterwandung ausgeführt ist, einen in der Prozesskammer befindlichen Träger, wobei Prozesskammer und Träger gegeneinander in vertikaler Richtung beweglich sind, einen Vorratsbehälter und einen in horizontaler Richtung bewegbaren Beschichter aufweist, wobei der Vorratsbehälter zumindest teilweise mit einem Kunststoffpulver nach einem der Ansprüche 1 bis 7 als Aufbaumaterial gefüllt ist.

14. Verfahren nach einem der Ansprüche 9 bis 11 oder System nach Anspruch 134, wobei die elektromagnetische Strahlung spezifisch im NIR-Bereich innerhalb eines Fensters von höchstens 50 nm, vorzugsweise höchstens 40 nm, weiter bevorzugt höchstens 30 nm und insbesondere höchstens 20 nm emittiert wird, wobei vorzugsweise die Strahlungsquelle elektromagnetische Strahlung im Bereich von 500 nm bis 1500 nm, insbesondere bei mindestens einer der Wellenlängen 980±7 nm und/oder 940±7 nm und/oder 810 ±7 nm und/oder 64047 nm und/oder 1064±7 nm emittiert.

15. Verfahren oder System nach 14, wobei die Strahlungsquelle mindestens einen Laser, vorzugsweise mindestens einen Diodenlaser umfasst.
